(19) Europäisches Patentamt

European Patent Office

Office européen des brevets

(11) **EP 1 294 953 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(21) Anmeldenummer: **01942872.1**

(22) Anmeldetag: **27.06.2001**

(51) Int Cl.[7]: **C21B 13/00**, C21B 13/14, C22B 1/10, C22B 5/14

(86) Internationale Anmeldenummer:
**PCT/AT2001/000207**

(87) Internationale Veröffentlichungsnummer:
**WO 2002/000943 (03.01.2002 Gazette 2002/01)**

(54) **VERFAHREN ZUR DIREKTREDUKTION VON FEINERZ SOWIE ANLAGE ZUR DURCHFÜHRUNG DES VERFAHRENS**

DEVICE FOR DIRECTLY REDUCING ORE FINE AND INSTALLATION FOR CARRYING OUT SAID METHOD

PROCEDE DE REDUCTION DIRECTE DE FINES DE MINERAI, ET INSTALLATION POUR LA MISE EN OEUVRE DE CE PROCEDE

(84) Benannte Vertragsstaaten:
**AT DE**

(30) Priorität: **28.06.2000 AT 11092000**

(43) Veröffentlichungstag der Anmeldung:
**26.03.2003 Patentblatt 2003/13**

(73) Patentinhaber:
• **Voest-Alpine Industrieanlagenbau GmbH & Co.
4020 Linz (AT)**
• **Brifer International Ltd.
Bridgetown, Barbados (BB)**
Benannte Vertragsstaaten:
**AT DE**

(72) Erfinder:
• **HIEBLER, Martin
A-8700 Leoben (AT)**
• **MILIONIS, Konstantin
A-8413 St. Georgen a/d Stiefling 122 (AT)**
• **KEPPLINGER, Leopold, Werner
A-4060 Leonding (AT)**
• **ROSSMANN, Gottfried
A-4020 Linz (AT)**

(74) Vertreter: **VA TECH Patente GmbH & Co
Stahlstrasse 21a
4031 Linz (AT)**

(56) Entgegenhaltungen:
**WO-A-97/13878          US-A- 3 984 229
US-A- 5 082 251          US-A- 5 584 910**

**Beschreibung**

Die Erfindung betrifft ein Verfahren zur Direktreduktion von Feinerz, enthaltend mindestens eine Erzkomponente aus der Gruppe magnetitischer, hydratischer, carbonatischer oder sulfidischer Erze, im Wirbelschichtverfahren, wobei das Feinerz in einer mit einem Heizmedium beaufschlagten Aufheiz-Wirbelschichtzone unter Verbrennung des Heizmediums erhitzt wird und anschließend in mindestens eine Reduktions-Wirbelschichtzone verbracht wird, in die Synthesegas als Reduktionsgas im Gegenstrom zum Feinerz eingeleitet und als Topgas abgezogen wird und in der eine Reduktion des Feinerzes zu Eisenschwamm durchgeführt wird, sowie eine Anlage zur Durchführung des Verfahrens.

Aus der US-A - 5,082,251 ist ein Verfahren zur Direktreduktion von Feinerz bekannt, bei dem das eisenreiche Feinerz in einem System von in Serie angeordneten Wirbelschichtreaktoren mit Hilfe von Reduktionsgas unter erhöhtem Druck reduziert und anschließend einer Heiß- oder Kaltbrikettierung unterworfen wird, wobei das Topgas nach Reinigung wieder als Reduktionsgas eingesetzt wird. Vor dem Einbringen in den ersten Wirbelschichtreaktor wird das Feinerz getrocknet, gesiebt und in einem Vorwärmreaktor durch Verbrennen von Erdgas erhitzt.

Sofern das Feinerz nicht bereits einen magnetitischen Anteil aufweist, kommt es aufgrund der Kinetik bei der Direktreduktion gemäß der US-A - 5,082,251 zur Magnetitbildung, und zwar in einer stetig von außen nach innen wachsenden Schicht, die sich auf jedem Partikel bzw. Korn des eisenoxidhältigen Materials bildet. Es hat sich in der Praxis gezeigt, daß die Magnetitbildung bzw. das Vorhandensein von Magnetit im Feinerz für eine Direktreduktion mit Reduktionsgas hemmend ist und sich bei magnetitischen Erzen nur ungenügende Reduktionsgrade erzielen lassen. Es gelingt nur mit erhöhtem Aufwand, d.h. durch Erhöhung des Reduktionsgasverbrauches, eine mehr oder weniger vollständige Reduktion des eingesetzten eisenoxidhältigen Materials zu erreichen, da es notwendig wäre, auch in den erstangeordneten Wirbelschichtzonen Reduktionsgas mit hohem Reduktionspotential zur Verfügung zu stellen.

Gemäß AT-B - 406 271 wird die Magnetitbildung, die bevorzugt bei einer Temperatur von etwa 580°C stattfindet, dadurch vermieden bzw. vermindert, daß der Übergang der Temperatur des eisenoxidhältigen Materials beim Erhitzen von 400 auf 580°C in möglichst kurzer Zeit bewerkstelligt sowie ein Halten in diesem kritischen Temperaturbereich vermieden wird. Eine Möglichkeit zur Durchführung besteht darin, die Temperatur oder die Reduktionsgeschwindigkeit im ersten Wirbelschichtreaktor durch zusätzliche Zufuhr von frischem Reduktionsgas oder durch Aufheizen bzw. Teilverbrennung des Reduktionsgases aus der nachfolgenden Wirbelschichtzone zu erhöhen. Gemäß einer weiteren Möglichkeit wird das eisenoxidhältige Material in der ersten Wirbelschichtzone nur auf eine Temperatur unterhalb des für die Magnetitbildung kritischen Temperaturbereichs erwärmt, worauf die Reduktion und weitere Erwärmung in der zweiten Wirbelschichtzone aufgrund des höheren Reduktionspotentials und der höheren Temperatur des Reduktionsgases schneller erfolgt und damit der Bereich der Magnetitbildung sehr rasch durchschritten wird.

Nachteilig hierbei ist jedoch, daß ein bereits im Feinerz vorhandener Magnetitanteil durch diese Maßnahmen nicht beseitigt werden kann und zur mehr oder weniger vollständigen Reduktion dieses Anteils ein erhöhter Bedarf an Reduktionsgas besteht.

Je nach Ursprungsort des Feinerzes kann das Ausgangsmaterial für die Direktreduktion nicht nur Hämatit und/oder Magnetit, sondern auch hydratische, carbonatische oder sulfidische Erzkomponenten in verschiedenen prozentuellen Anteilen, entweder allein oder als Gemisch, enthalten.

Werden solche Feinerze oder Mischungen verschiedenster Feinerze ohne Vorbehandlung zur Direktreduktion eingesetzt, kann es in Abhängigkeit von Menge und Gehalt der oben genannten Erzkomponenten zu starken Beeinträchtigungen des Reduktionsprozesses bzw. des Reduktionsverfahrens kommen. Wird die Reduktion beispielsweise von einem hauptsächlich $H_2$- und CO-enthaltenden Reduktionsgas bewirkt, können in der reduzierenden Atmosphäre der Reduktionszonen neben der Hauptreduktionsreaktion $Fe_2O_3 + 3\,H_2/CO \rightarrow 2\,Fe + 3\,H_2O/CO_2$ folgende Reaktionen ablaufen:

$$Fe_3O_4 + CO/H_2 \rightarrow 3\,FeO + CO_2/H_2O \tag{1}$$

$$Fe_3O_4 + 4\,CO/H_2 \rightarrow 3\,Fe + 4\,CO_2/H_2O \tag{2}$$

$$FeOOH + CO/H_2 \rightarrow FeO + CO_2/H_2O + \tfrac{1}{2}\,H_2 \tag{3}$$

$$FeCO_3 \rightarrow FeO + CO_2 \tag{4}$$

$$FeS_2 + 2\,H_2 \rightarrow Fe + 2\,H_2S \tag{5}$$

Gemäß Reaktion (1) findet eine Reduktion des Magnetits zu Wüstit FeO statt, die jedoch, wie bereits erwähnt, kinetisch gehemmt abläuft. Reaktion (2) läuft bei Temperaturen unter 570°C, Reaktion (1) bei Temperaturen darüber ab. Bei der Reduktion von hydratischen Erzkomponenten, z.B. Limonit, (3) entsteht durch Abspaltung der Hydratgruppe (n) eine große Menge an Wasserdampf, die die Reduktion des Eisenoxids mittels Wasserstoff insofern beeinflußt, als das chemische Gleichgewicht der Reduktionsreaktion auf die Seite des Wasserstoffs hin verschoben wird, d.h., daß durch das Vorhandensein von Wasser im Reduktionsgas die Bildung von Wasserdampf aus Wasserstoff und dem als Oxid vorliegenden Sauerstoff im Feinerz und damit die Reduktionsrate der Eisenoxide verringert wird. Gemäß Reaktion (4) spaltet carbonatisches Erz Kohlendioxid ab, welches das Reduktionspotential des Reduktionsgases verringert bzw. dessen Oxidationsgrad erhöht, woraus ein höherer Gasverbrauch für das Erreichen eines bestimmten Reduktionsgrades resultiert. Sulfidische Erzkomponenten wiederum bilden Schwefelwasserstoff (5), der im Fall eines erhöhten Anteils an Sulfiden im Feinerz aus dem Reduktionsgas vor dessen Wiederverwendung aufwendig entfernt werden muß.

Aus der WO-A - 97/45564 ist ein Verfahren zur Behandlung von EAF-Staub bekannt, wobei der Staub vorgewärmt und unter Bedingungen dekontaminiert wird, bei denen der Magnetitanteil des Staubes zu Hämatit oxidiert wird. Anschließend wird der Hämatit im Staub mittels eines Reduktionsgases, welches danach seine Verbrennungswärme zur Erwärmung des Staubes abgibt, in einem Wirbelschichtreaktor reduziert und das so gewonnene eisenreiche Material in den Elektrolichtbogenofen zurückgeführt.

Dieses Verfahren ist jedoch nicht für die Direktreduktion einer großen Menge Feinerz im Wirbelschichtverfahren geeignet; das neben Magnetit und gegebenenfalls Hämatit auch noch andere Erzkomponenten enthält. Zudem wird das Reduktionsgas gemäß diesem Verfahren zur Erwärmung des Staubes verbrannt und nicht weiter hinsichtlich seines Reduktionspotentiales genutzt, wodurch erhebliche Mengen an Reduktionsgas zur vollständigen Reduktion des eisenhaltigen Materials nötig sind.

In der WO-A - 92/02646 ist ein Verfahren zur Herstellung von Eisencarbid beschrieben, bei dem das eingesetzte Erz in einem Ofen unter oxidierender Atmosphäre vorgewärmt wird, wobei zumindest ein Teil von im Erz vorhandenem Magnetit zu Hämatit oxidiert wird, und danach in einem Wirbelschichtreaktor mittels eines $H_2$-, CO-, $CO_2$-, $H_2O$-, $N_2$- sowie hauptsächlich $CH_4$-hältigen Gases in Eisencarbid umgewandelt wird.

Der Nachteil dieses Verfahrens besteht jedoch darin, daß für die Umwandlung der Eisenoxide zu Eisencarbid bedeutende Mengen an gasförmigen Kohlenwasserstoffen benötigt werden und daß der Umwandlungsprozeß äußerst empfindlich auf Änderungen hinsichtlich des Einsatzmaterials und der Prozeßparameter reagiert, wodurch die Einsatzmöglichkeiten dieses Verfahrens beschränkt sind. Für eine Reihe von nachfolgenden Verarbeitungsprozessen bei der Roheisen- und Stahlerzeugung ist zudem ein vollständiger Ersatz von Eisenschwamm durch Eisencarbid nur in Verbindung mit aufwendigen Adaptionen möglich.

Die Erfindung bezweckt die Vermeidung der oben genannten Nachteile und Schwierigkeiten und stellt sich die Aufgabe, ein Verfahren für die Direktreduktion von Feinerz bereitzustellen, welches hinsichtlich der Zusammensetzung des Einsatzmaterials nicht eingeschränkt, sondern ohne Störung des Reduktionsprozesses auf alle Feinerze und Feinerzmischungen anwendbar ist. Weiters soll der für die Direktreduktion der Feinerze benötigte Gesamtenergiebedarf möglichst reduziert werden.

Die Erfindung ist in den Ansprüchen definiert.

Es ist allgemein bekannt, daß Feinerze neben Gangart nicht nur aus magnetitischen, hydratischen, carbonatischen, sulfidischen und/oder hämatitischen Eisenerzen aufgebaut sind, sondern auch andere Erze, wie Manganerze, sowie Spuren anderer Elemente und Metalle enthalten können.

Magnetit wird gemäß $2\,Fe_3O_4 + \tfrac{1}{2}\,O_2 \rightarrow 3\,Fe_2O_3$ in Hämatit umgewandelt. Würde das magnetitische Feinerz ohne eine solche Oxidation reduziert werden, wäre die Reaktionskinetik gehemmt, weil das Reduktionsgas an der Diffusion durch die dichte Magnetitschicht des Erzkornes gehindert wird und somit der Stoffaustausch des Reduktionsgases nicht wie bei porösen Hämatitkörnern erfolgen kann.

Hydratische, carbonatische und sulfidische Erzkomponenten reagieren nach folgenden Gleichungen:

$$2\,FeOOH \rightarrow Fe_2O_3 + H_2O$$

$$2\,FeCO_3 + \tfrac{1}{2}\,O_2 \rightarrow Fe_2O_3 + 2\,CO_2$$

$$2\,FeS_2 + 3\tfrac{1}{2}\,O_2 \rightarrow Fe_2O_3 + 2\,SO_2$$

In der Aufheiz-Wirbelschichtzone erfolgt eine Abspaltung der Hydrat-, Carbonat- und Sulfidgruppen als Wasserdampf, Kohlendioxid und Schwefeldioxid sowie eine gleichzeitige Oxidation des meist zweiwertigen Eisens zu Hämatit, welches die nachfolgende Dircktreduktion des Feinerzes im Wirbelschichtverfahren erheblich vereinfacht. Zusätzlich ergibt sich durch die höheren Temperaturen zu Beginn der Reduktion ein schnellerer Reduktionsfortschritt, der kürzere Verweilzeiten ermöglicht und dadurch zu einem geringeren spezifischen Energiebedarf führt.

Das Heizmedium wird vorzugsweise mit hohem Luftüberschuß vollständig verbrannt, wobei die Temperatur der Aufheiz-Wirbelschichtzone und der Sauerstoffgehalt der Verbrennungsluft in Abhängigkeit von der Zusammensetzung des eingesetzten Feinerzes zu wählen sind. Der für die Umwandlung in Hämatit benötigte Mindestluftüberschuß ergibt sich aus dem stöchiometrischen Sauerstoffbedarf der jeweils vorhandenen Erze, wobei im Gas ein beliebig hoher $CO_2$- und $H_2O$-Gehalt sowie auch freier Sauerstoff erlaubt sind. Praktisch ergibt sich der Bedarf aus der gewünschten Wirbelschicht-Temperatur, die mittels des Verhältnisses von Heizmedium und Luft entsprechend der exothermen Verbrennungsreaktion gezielt einstellbar ist.

Der Temperaturbereich für die gezielte Erwärmung des Feinerzes wird einerseits von der Zersetzung des Fe-Hydrats und -Carbonats, für welche Mindesttemperaturen von 200°C-400°C nötig sind, und andererseits von der Oxidationsreaktion von $Fe_2S$ (vorzugsweise 600-800°C), FeO bzw. $Fe_3O_4$ zu Hämatit bestimmt. Aus kinetischen Erfordernissen ist für die Oxidation eine Mindesttemperatur von 400°C notwendig.

Der technisch sinnvolle Temperaturbereich jedoch, in dem Oxidation zu Hämatit durchgeführt wird, liegt im allgemeinen oberhalb einer Temperatur von 600°C und reicht bis zur Erweichungstemperatur des Erzes bzw. der Erzkomponenten, also etwa 900 bis 1200°C.

Vorteilhaft wird das zumindest zum Teil von zumindest teilweise verbrauchtem Reduktionsgas aus den nachfolgenden Reduktionsreaktoren gebildete Heizmedium, welches unter $O_2$-Überschuß verbrannt wird, im ungereinigten Zustand eingesetzt. Von Vorteil ist hierbei, daß die Restwärme des Reduktionsgases für die Aufheiz-Wirbelschichtzone genutzt werden kann.

Gemäß einer anderen bevorzugten Verfahrensvariante wird verbrauchtes Reduktionsgas, welches unter $O_2$-Überschuß verbrannt wird, im gereinigten und gegebenenfalls verdichteten Zustand als Heizmedium eingesetzt. Die Gefahr des Verstopfens von Leitungselementen, wie Ventilen, durch staubbeladenes Reduktionsgas wird durch diese Maßnahme beseitigt.

Vorzugsweise wird zusätzlich in der Aufheiz-Wirbelschichtzone eine Trocknung des Feinerzes durchgeführt, wobei auch die Trocknung unter Zufuhr von Sauerstoff oder eines sauerstoffhältigen Gases zwecks Einstellung oxidierender Bedingungen bei Atmosphärendruck erfolgt. Die zum Betrieb unter Überdruck notwendigen Schleusensysteme der Chargiereinrichtung sind bei Einsatz von feuchtem Erz in Gefahr zu verstopfen, so daß die Trocknung und die oxidierende Vorwärmung bei Atmosphärendruck zweckmäßig ist. Diese Maßnahme bietet zudem den Vorteil, daß der Trocken- und Vorwärmreaktor auf niedrigerem Niveau stehen kann, da er nicht über Standpipes mit den nachfolgenden Reduktionsreaktoren verbunden sein muß, sondern der Materialtransport vom Trocken- und Vorwärmreaktor zum Befüllsystem der Reduktionsreaktoren auf mechanischem Weg, beispielsweise mittels eines Becherwerks, erfolgen kann. Daraus resultieren eine reduzierte Gesamtbauhöhe und somit wesentlich günstigere Standkosten für die Anlage.

Sind bereits genug Reduktionsreaktoren vorhanden, ist es bevorzugt, daß das Feinerz in einer Trocknungs-Wirbelschichtzone getrocknet und nach Verbringen in eine Aufheiz-Wirbelschichtzone im trockenen Zustand mit dem Heizmedium beaufschlagt wird, wobei die Aufheiz-Wirbelschichtzone im für in Reduktionsgasförderrichtung letztangeordneten Reduktionsreaktor vorgesehen sein kann.

Gemäß einer bevorzugten Ausführungsform sind der Aufheiz-Wirbelschichtzone drei weitere in Serie angeordnete Reduktions-Wirbelschichtzonen nachgeordnet, wobei das erhitzte Feinerz diese drei nachgeordneten Reduktions-Wirbelschichtzonen hintereinander im Gegenstrom zu einem Reduktionsgas durchläuft. Da neben einer Vorwärmung in der Aufheiz-Wirbelschichtzone auch eine Oxidation des Feinerzes zu Hämatit erfolgt, genügen in den meisten Fällen drei nachfolgende Reduktionsstufen zum Erreichen des geforderten Metallisierungsgrades.

Zweckmäßig wird das aus der Aufheiz-Wirbelschichtzone abgezogene Abgas zur Vorwärmung der für die Verbrennung des Heizmediums dienenden Luft herangezogen.

Es ist vorteilhaft, das aus der Reduktions-Wirbelschichtzone austretende Topgas zur Vorwärmung der für die Verbrennung des Heizmediums dienenden Luft heranzuziehen.

Nach einer anderen Ausführungsform der Erfindung wird das in der Aufheiz-Wirbelschichtzone erhitzte Feinerz in eine Kühlzone eingebracht und in dieser mittels Luft unter Vorwärmung derselben gekühlt, wobei die so vorgewärmte Luft in die Aufheiz-Wirbelschichtzone zwecks Verbrennung des Heizmediums eingeleitet wird.

Diese Verfahrensvariante ist vorteilhaft, wenn ein Vorwärmreaktor für die Direktreduktion vorgesehen ist, der für die gezielte Erwärmung und Oxidation des Feinerzes beispielsweise eine zu geringe Kapazität besitzt. In diesem Fall kann die Umwandlung der nicht hämatitischen Feinerzkomponenten gemeinsam mit der Trocknung anstelle der Vorwärmung des Feinerzes in einer Wirbelschicht erfolgen, wobei es keine Rolle spielt, daß das Feinerz nach der gezielten Erwärmung unter oxidierenden Bedingungen bei gleichzeitiger Trocknung wieder abgekühlt wird, ehe es in die Reduktionsstufen verbracht wird, da eine Einrichtung zum Vorwärmen des Feinerzes zur Verfügung steht.

Diese Ausführungsform hat weiters den Vorteil, daß die Kalzinierung, die Oxidation und die gleichzeitige Trocknung in einem separaten System neben der Wirbelschicht-Reduktionsanlage durchgeführt werden kann. Die Kühlung des Erzes ist außerdem vorteilhaft, da damit die Chargierung des Erzes in den nachfolgenden Wirbelschichtreaktor mit einfachem Equipment für niedrige Temperaturen durchgeführt werden kann.

Bevorzugt wird die vorgewärmte Luft aus der Kühlzone durch Wärmetausch mit dem Abgas aus der Aufheiz-Wirbelschichtzone weiter erhitzt.

Vorzugsweise wird das aus einer der Aufheiz-Wirbelschichtzone in Förderrichtung des Feinerzes nachgeordneten Reduktions-Wirbelschichtzone austretende Reduktionsgas zum einen Teil als Heizmedium der Aufheiz-Wirbelschichtzone verwendet und zum anderen Teil direkt einer Reinigung, Kühlung und Verdichtung sowie einer Aufheizung gemeinsam mit frisch zugeführtem Reduktionsgas unterworfen, worauf es als Recycle-Reduktionsgas wiederum für die Direktreduktion eingesetzt wird.

Eine Anlage zur Durchführung des erfindungsgemäßen Verfahrens mit einem Aufheiz-Wirbelschichtreaktor und mit mindestens einem Reduktions-Wirbelschichtreaktor zur Direktreduktion von Feinerzen mittels eines Reduktionsgases, mit einer Reduktionsgaszuleitung zum Reduktions-Wirbelschichtreaktor und einer Topgas-Ableitung für verbrauchtes Reduktionsgas aus dem Reduktions-Wirbelschichtreaktor, einer in den Aufheiz-Wirbelschichtreaktor mündenden Erzzuleitung und einem den Aufheiz-Wirbelschichtreaktor mit dem Reduktions-Wirbelschichtreaktor verbindenden Fördersystem für Feinerz, wobei der Aufheiz-Wirbelschichtreaktor mit einer ein Heizmedium führenden Leitung und einer Sauerstoff und/oder ein sauerstoffhältiges Gas führenden Leitung verbunden ist, ist dadurch gekennzeichnet, daß eine Einstelleinrichtung zur Sicherung einer in Abhängigkeit der Menge des Heizmediums einstellbaren Sauerstoffmenge, welche größer als die zur Verbrennung des Heizmediums erforderliche Menge ist, vorgesehen ist und die Topgas-Ableitung in die Reduktionsgas-Zuleitung mündet.

Gemäß einer Ausführungsform ist die Topgas-Ableitung über eine Zweigleitung mit der das Heizmedium führenden Leitung verbunden.

Die Topgas-Ableitung ist vorzugsweise mit Einrichtungen zum Kühlen und Waschen sowie mit einem Kompressor zur Verdichtung des Topgases ausgestattet und im Anschluß an diese Einrichtungen oder an den Kompressor über eine Zweigleitung mit der das Heizmedium führenden Leitung verbunden, wodurch ein Verstopfen von Leitungselementen durch staubbeladenes Topgas vermieden wird.

Zweckmäßig ist dem Aufheiz-Wirbelschichtreaktor eine Trocknungseinrichtung, wie ein Trocknungs-Wirbelschichtreaktor, für das Feinerz vorgeordnet.

Eine bevorzugte Ausführungsform ist dadurch gekennzeichnet, daß dem Aufheiz-Wirbelschichtreaktor drei Reduktions-Wirbelschichtreaktoren, welche das Feinerz hintereinander durchläuft, in Serie nachgeordnet sind, wobei die Reduktionsgas-Zuführung mit dem in Fließrichtung des Feinerzes letztangeordneten Reduktions-Wirbelschichtreaktor und die Topgas-Ableitung mit dem ersten Reduktions-Wirbelschichtreaktor verbunden ist.

In der Sauerstoff und/oder das sauerstoffhältige Gas führenden Leitung ist vorteilhaft ein Rekuperator für Abgas vom Aufheiz-Wirbelschichtreaktor vorgesehen, wodurch der spezifische Verbrauch an Heizmedium für die Erzielung einer bestimmten Temperatur im Aufheiz-Wirbelschichtreaktor verringert werden kann.

Weiters ist es vorteilhaft, wenn in der Sauerstoff und/oder das sauerstoffhältige Gas führenden Leitung ein Rekuperator für ungekühltes Topgas vorgesehen ist.

Gemäß einer anderen bevorzugten Ausführungsform der Erfindung ist nach dem Aufheiz-Wirbelschichtreaktor ein mit Luft als Kühlmedium arbeitender Kühler für das Feinerz vorgesehen, der hinsichtlich des Kühlmediums leitungsmäßig über eine Gasleitung mit der Sauerstoff und/oder das sauerstoffhältige Gas führenden Leitung verbunden ist.

Zweckmäßig ist dabei in der Gasleitung ein Rekuperator für Abgas vom Aufheiz-Wirbelschichtreaktor vorgesehen.

Vorzugsweise ist eine erfindungsgemäße Anlage dadurch gekennzeichnet, daß die Topgas-Ableitung über Einrichtungen zum Kühlen und Waschen, einen Kompressor und einen Reduktionsgasofen in die Reduktionsgas-Zuleitung mündet und daß eine frisches Reduktionsgas führende Reduktionsgasleitung vorgesehen ist, die vor dem Reduktionsgasofen in die Topgas-Ableitung einmündet.

Die Erfindung ist nachfolgend anhand der Zeichnung näher erläutert, wobei die Fig. 1 bis 3 und 6 jeweils eine Anlage zur Durchführung einer Ausführungsform des erfindungsgemäßen Verfahrens und die Fig. 4 und 5 jeweils einen Ausschnitt aus einer Anlage zur Durchführung des erfindungsgemäßen Verfahrens in schematischer Darstellung veranschaulichen.

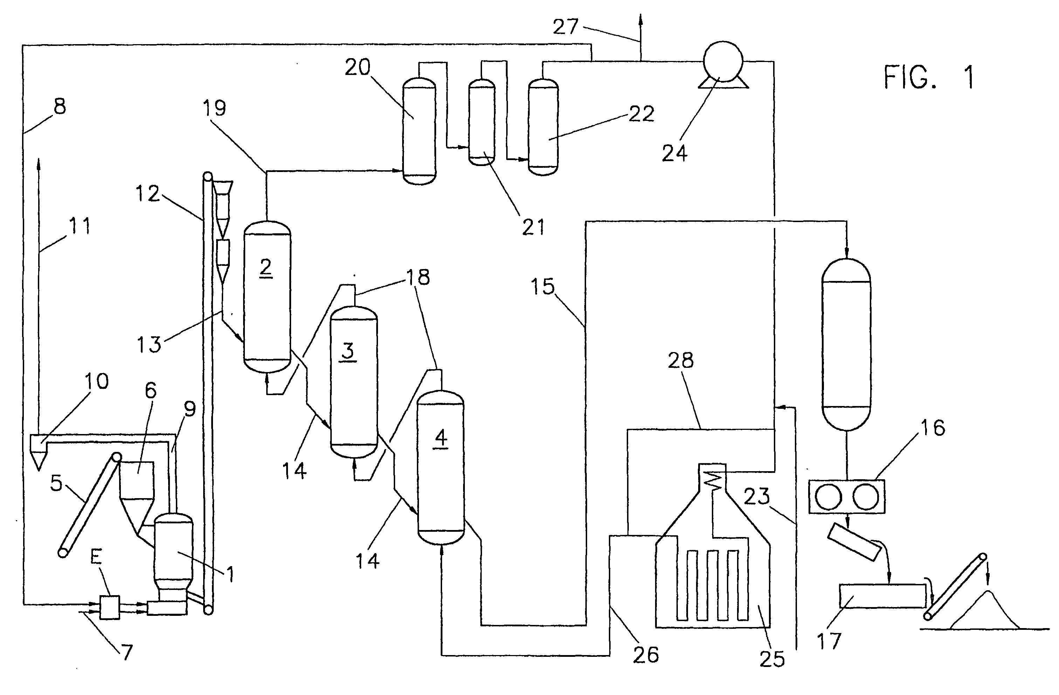

Die Anlage gemäß Fig. 1 weist einen Aufheiz-Wirbelschichtreaktor 1 sowie drei in Serie hintereinander geschaltete Reduktions-Wirbelschichtreaktoren 2 bis 4 auf, wobei Feinerz über eine Erzzuleitung 5 einer Dosier- bzw. Chargiereinrichtung 6 zugeleitet wird, von welcher das Feinerz in den Aufheiz-Wirbelschichtreaktor 1 chargiert wird, der gleichzeitig als Wirbelschichttrockner für das üblicherweise mit einem gewissen Feuchtegehalt vorliegende Feinerz fungiert. Im Aufheiz-Wirbelschichtreaktor 1 findet ein Trocknungsprozeß sowie neben einer gezielten Erwärmung unter zusätzlicher Zufuhr von Sauerstoff oder eines sauerstoffhältigen Gases zwecks Einstellung oxidierender Bedingungen eine Abtrennung der Hydrat-, Carbonat- und/oder Sulfidgruppen und/oder eine Umwandlung in Hämatit statt, wobei Temperatur und Sauerstoffgehalt in Abhängigkeit von der Zusammensetzung des Feinerzes gewählt werden. Zu diesem Zweck münden eine ein Sauerstoff enthaltendes Gas führende Leitung 7 und eine ein Heizmedium führende Leitung 8 in den Aufheiz-Wirbelschichtreaktor 1, in denen eine Einstelleinrichtung E zur Sicherstellung der gewählten Sauerstoffmenge, welche größer als die zur Verbrennung des Heizmediums erforderliche Menge ist, vorgesehen ist. Das sauerstoffhältige Gas, üblicherweise Luft, dient neben den entstehenden Verbrennungsgasen gleichzeitig als Fluidisierungsgas für die Feinerzwirbelschicht.

Die aus dem Aufheiz-Wirbelschichtreaktor 1 austretenden heißen Abgase gelangen über die Ableitung 9 in einen Zyklon 10, in welchem eine Abtrennung der vom Abgas mitgerissenen Feinerzpartikel vom Gas erfolgt. Die Feinerzpartikel werden in die Chargiereinrichtung 6 rückgeführt und das gereinigte Abgas über eine Leitung 11 abgeleitet. Die fühlbare Wärme des Abgases kann beispielsweise mittels eines Wärmetauschers zur Erwärmung der durch die Leitung 7 dem Aufheiz-Wirbelschichtreaktor 1 zugeführten Verbrennungsluft genutzt werden.

Die Verweilzeit des Feinerzes im Aufheiz-Wirbelschichtreaktor 1, die Zusammensetzung des Einsatzmaterials, der Sauerstoffgehalt des Verbrennungsgases und die Temperatur bestimmen den Umsatz der magnetitischen, hydratischen, carbonatischen und/oder sulfidischen Erzkomponenten zu Hämatit. Bei Vorwärmung der Verbrennungsluft kann die spezifische Verbrennungsluftmenge bei gleichbleibender Menge an Heizmedium erhöht werden, wodurch die Oxidation mit höheren $O_2$-Anteilen im Rauchgas durchgeführt und damit die Oxidationsrate gesteigert werden kann.

Abgesehen von einer Oxidation wird das Feinerz, das vorzugsweise zu über 90 % zu Hämatit umgesetzt wird, im Aufheiz-Wirbelschichtreaktor 1 auf eine Temperatur von mindestens etwa 700°C erwärmt. Vom Aufheiz-Wirbelschichtreaktor 1 wird das vorgewärmte Feinerz zu dem in Förderrichtung des Feinerzes ersten Reduktions-Wirbelschichtreaktor 2 mit Hilfe eines Fördersystems 12, z.B. eines Becherwerks, transportiert. Da die Trocknung, Vorwärmung und Oxidation des Feinerzes im Aufheiz-Wirbelschichtreaktor 1 bei Atmosphärendruck durchgeführt wird, ist es möglich den Aufheiz-Wirbelschichtreaktor 1 auf einem niedrigeren Niveau und nicht oberhalb des ersten Reduktions-Wirbelschichtreaktors 2 anzuordnen, wodurch die Gesamthöhe der Anlage verringert wird.

Das vorgewärmte Feinerz wird mittels eines nicht näher dargestellten Schleusensystems 13 in die unter Druck stehende Reduktionsreaktorkaskade eingebracht. Vom Reduktions-Wirbelschichtreaktor 2 wird das Feinerz über Förderleitungen 14 zu den Reduktions-Wirbelschichtreaktoren 3 und 4 geleitet, wobei sich innerhalb der Wirbelschichtreaktoren 2 bis 4 jeweils Wirbelschichtzonen ausbilden. Das fertig reduzierte Feinerz (Eisenschwamm) wird über eine Leitung 15 einer Brikettieranlage 16 zugeführt, heißbrikettiert, in einer Kühleinrichtung 17 gekühlt und anschließend für eine weitere Verwendung gelagert. Erforderlichenfalls wird das reduzierte Eisen während der Brikettierung durch ein nicht dargestelltes Inertgas-System vor einer Reoxidation geschützt.

Reduktionsgas wird im Gegenstrom zum Feinerzfluß von Reduktions-Wirbelschichtreaktor 4 zu Reduktions-Wirbelschichtreaktor 3 und 2 über Leitungen 18 geführt, als Topgas über eine Topgas-Ableitung 19 aus dem in Gasrichtung letzten Reduktions-Wirbelschichtreaktor 2 abgeleitet und in den Einrichtungen 20 bis 22 gekühlt und gewaschen.

In die Topgas-Ableitung 19 mündet eine frisches Reduktionsgas führende Reduktionsgasleitung 23, nachdem das Topgas mittels eines Kompressors 24 verdichtet wurde. Das sich so bildende Mischgas wird durch einen Reduktionsgasofen 25 hindurchgeschickt, auf eine Reduktionsgastemperatur von etwa 800°C erhitzt und dem in Gasdurchflußrichtung ersten Reduktions-Wirbelschichtreaktor 4 über eine Reduktionsgas-Zuleitung 26 zugeführt, wo es mit den Feinerzen unter Bildung von Eisenschwamm reagiert.

Ein Teil des Topgases wird aus dem Gas-Kreislauf 18, 19, 26 über eine Ableitung 27 ausgeschleust, um eine Anreicherung von Inertgasen, wie $N_2$, zu vermeiden. Ein Teil des aus Topgas und frischem Reduktionsgas gebildeten Mischgases kann auch über eine Bypassleitung 28 am Reduktionsgasofen 25 vorbeigeführt und unerhitzt in die Leitung 26 eingeleitet werden.

Ein weiterer Teil des gereinigten Topgases wird vor dem Kompressor 24 von der Topgas-Ableitung 19 abgezweigt und als Heizmedium über die Leitung 8 in den Aufheiz-Wirbelschichtreaktor 1 eingebracht, wo es vorteilhaft unter hohem Luftüberschuß vollständig verbrannt wird.

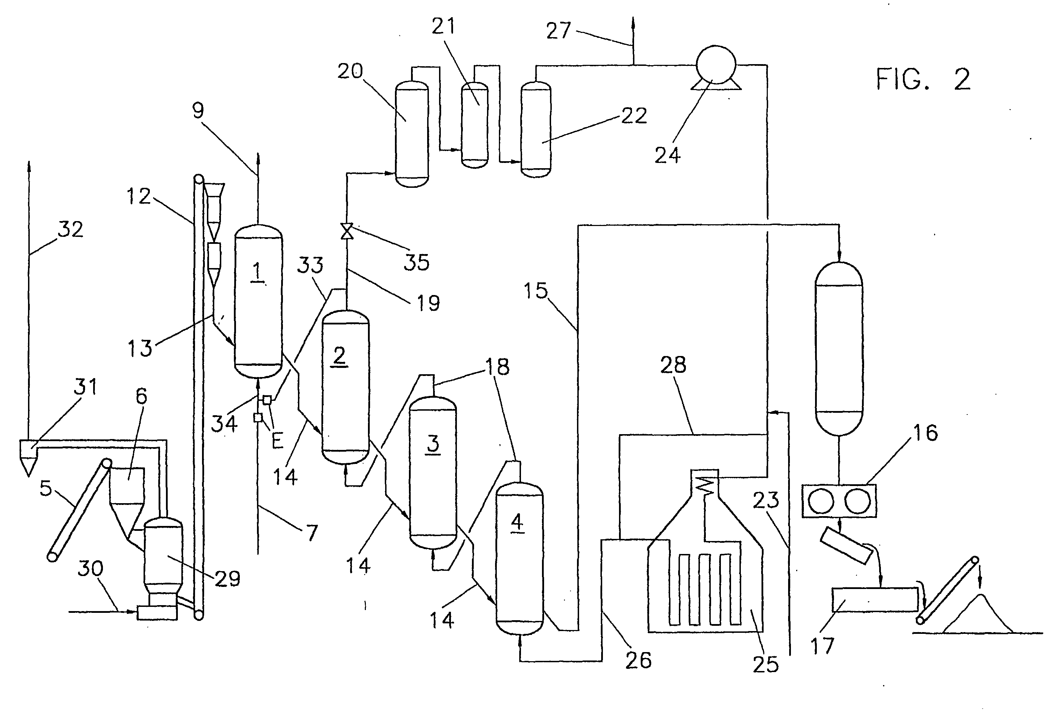

Im Unterschied zur Anlage gemäß Fig. 1 weist die in Fig. 2 dargestellte Anlage vier in Serie hintereinander geschaltete Wirbelschichtreaktoren 1 bis 4 und einen nur für die Trocknung des Feinerzes bestimmten Wirbelschichtreaktor 29 auf, der zu diesem Zweck kleiner ausgelegt sein kann als ein sowohl für eine Trocknung als auch für eine Erwärmung und Oxidation des Feinerzes dienender Aufheiz-Wirbelschichtreaktor gemäß Fig. 1.

Das Feinerz wird über die Erzzuleitung 5 und die Chargiervorrichtung 6 in den Trocknungs-Wirbelschichtreaktor 29 eingebracht, in dem das Feinerz durch Zufuhr eines heißen Gases über Leitung 30 entfeuchtet wird. Das mit Wasser und Staub beladene Gas wird in einem Zyklon 31 gereinigt und über Leitung 32 abgeleitet.

Vom Trocknungs-Wirbelschichtreaktor 29 gelangt das getrocknete Feinerz über ein Fördersystem 12 und ein Schleusensystem 13 in den Aufheiz-Wirbelschichtreaktor 1, der in Förderrichtung des Feinerzes als erster der in Serie hintereinander geschalteten. Wirbelschichtreaktoren 1 bis 4 vorgesehen ist, d.h. einen Teil der Reaktorkaskade bildet.

Als Heizmedium für die im Aufheiz-Wirbelschichtreaktor 1 stattfindende gezielte Erwärmung unter oxidierenden Bedingungen wird ein Teil des Topgases aus dem ersten Reduktions-Wirbelschichtreaktor 2 von der Topgas-Ableitung 19 noch vor den Reirigungs- und Kühleinrichtungen 20 bis 22 über Zweigleitung 33 abgezweigt und in einer unterhalb des Aufheiz-Wirbelschichtreaktors 1 angeordneten Brennkammer 34 dem über Leitung 7 zugeführten $O_2$-hältigen Gas beigemengt und unter Luftüberschuß verbrannt. Die der Aufheiz-Wirbelschichtzone 1 zugeführte Menge an ungereinigtem Reduktionsgas wird über das in der Topgas-Ableitung 19 vorgesehene Ventil 35 geregelt. Dadurch, daß das Topgas im ungekühlten Zustand der Topgas-Ableitung 19 entnommen wird, kann dessen Restwärme für den Oxidations- und Erwärmungsprozeß genutzt werden. Die Einstelleinrichtung E ist hierbei zweiteilig ausgeführt und sowohl in Leitung 33 als auch in Leitung 7 vorgesehen.

Im obersten Reaktor, also dem Aufheiz-Wirbelschichtreaktor 1, findet somit eine effektive Erwärmung unter oxidierenden Bedingungen und in den drei Reduktions-Wirbelschichtreaktoren 2 bis 4 ein intensiverer Gaskreislauf statt. Außerdem ergibt sich durch den Einsatz von Reduktionsgas anstelle eines anderen Heizmediums im Aufheiz-Wiibelschichtreaktor 1 eine höhere Wirtschaftlichkeit, da das Reduktionsgas bereits in den ' drei Reduktions-Wirbelschichtreaktoren 2 bis 4 seine Reduktionsarbeit verrichtet.

Das Abgas aus der Aufheiz-Wirbelschichtzone verläßt den Prozeß über eine in der Ableitung 9 nicht dargestellte Entstaubungseinrichtung.

Anstelle eines Wirbelschichtreaktors könnte die Aufheiz-Wirbelschichtzone alternativ auch in einem Zyklon oder einer Zyklonkaskade ausgebildet sein.

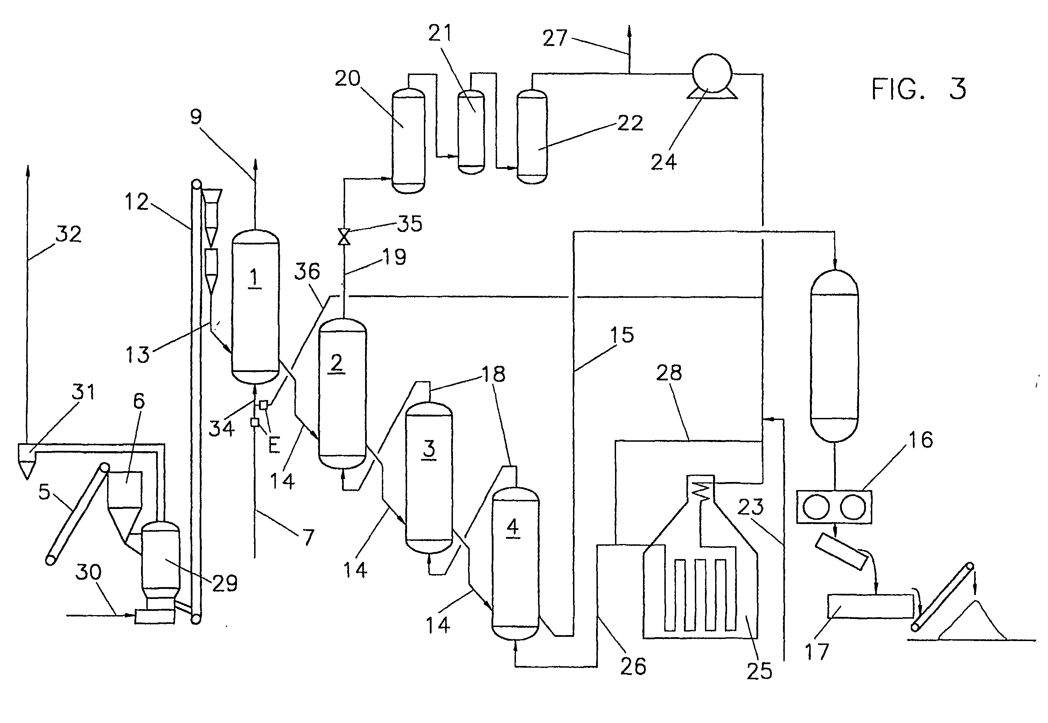

Gemäß der in Fig. 3 dargestellten Ausführungsform wird das in der Verfahrensvariante gemäß Fig. 2 gegebenenfalls auftretende Problem des Ventils im aus dem Reduktions-Wirbelschichtreaktor 2 austretenden staubbeladenen Topgas vermieden, indem das Reduktionsgas im gereinigten und verdichteten Zustand nach dem Kompressor 24 von der Topgas-Ableitung 19 über Leitung 36 abgezweigt und der Brennkammer 34 des Aufheiz-Wirbelschichtreaktors 1 zugeführt wird. Diese Variante ist technisch leichter durchführbar als jene, bei der das Reduktionsgas vor der Reinigungsstufe als Heizmedium abgezweigt wird.

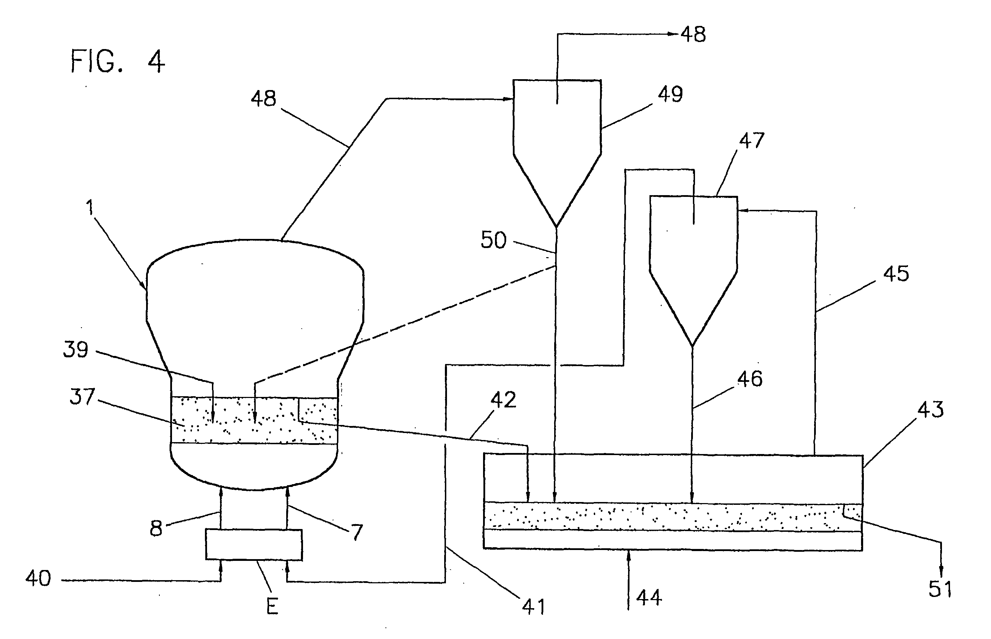

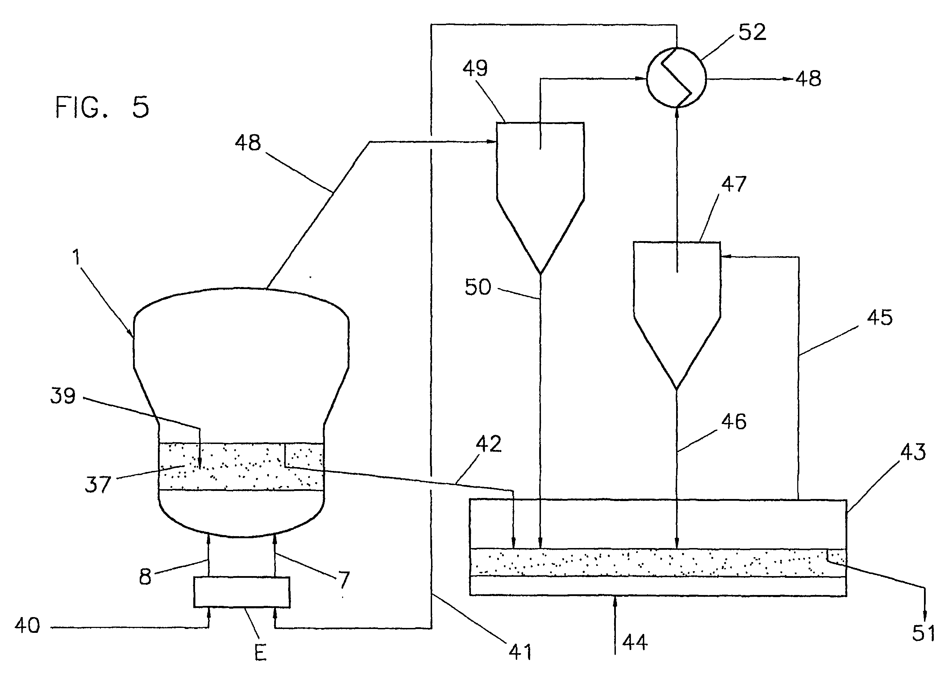

Die Fig. 4 und 5 veranschaulichen eine Variante des erfindungsgemäßen Verfahrens, bei der neben einer Umwandlung des eingesetzten Erzes in Hämatit unter oxidierenden Bedingungen eine Trocknung des Feinerzes stattfindet.

In die Aufheiz-Wirbelschichtzone 37 des Aufheiz-Wirbelschichtreaktors 1 wird feuchtes Feinerz 39 chargiert, wo sich eine homogene Wirbelschicht ausbildet. Zur Fluidisierung des Feinerzes 39 sowie zu dessen Erwärmung unter oxidierenden Bedingungen werden ein Heizmedium 40, vorzugsweise verbrauchtes Reduktionsgas, und ein $O_2$-häl-tiges Gas 41, z.B. Luft, in den Bodenbereich des Wirbelschichtreaktors 1 eingebracht, in dem eine vollständige Verbrennung des Heizmediums bewirkt wird.

Das heiße oxidierte Feinerz 42 wird einem Fließbettkühler 43 zugeführt, der das auf etwa 900°C erwärmte Feinerz 42 mittels Luft 44 auf ca. 100°C abkühlt. Dabei werden Luft 44 und Feinerz 42 im Kreuzstrom geführt, wodurch eine geringe spezifische Kühlluftmenge erreicht wird. Die vorgewärmte Abluft 45 des Fließbettkühlers 43 wird als $O_2$-hältiges Gas 41 zur Verbrennung des Heizmediums 40 sowie zur Trocknung und Oxidation des Feinerzes 39 verwendet. Zur Abscheidung der von der Abluft 45 ausgetragenen Feinerzteilchen 46 dient ein Gas/Feststoff-Abscheider 47, vorzugsweise ein Zyklon, von dem die Luft 41 zum Wirbelschichtreaktor 1 transportiert und die abgeschiedenen Feinerzteilchen 46 in den Fließbettkühler 43 rückgeführt werden.

Das Abgas 48 des Wirbelschichtreaktors 1 wird ebenfalls in einem Gas/Feststoff-Abscheider 49 von mitgeführten Feinerzteilchen 50 gereinigt und abgeleitet. Die abgeschiedenen Feinerzteilchen 50 werden ebenfalls in den Fließbettkühler 43 eingebracht. Wenn es verfahrenstechnisch erforderlich ist, kann auch eine Rückführung der Feinerzteilchen 50 wieder in die Aufheiz-Wirbelschichtzone 37 erfolgen, wie es durch den strichlierten Pfeil angedeutet ist. Das abgekühlte, hauptsächlich hämatitische Feinerz 51 kann entweder zwischengelagert oder gleich anschließend in eine Reduktions-Wirbelschichtzone chargiert werden.

Gemäß Fig. 5 wird die vorgewärmte Abluft 45 aus dem Fließbettkühler 43 nach Abscheidung der Feinerzteilchen 46 im Zyklon 47 nicht sofort dem Wirbelschichtreaktor 1 als Verbrennungsluft zugeführt, sondern in einem Wärmetauscher 52 rekuperativ durch das heiße Abgas 48 des Wirbelschichtreaktors 1 weiter erhitzt.

Anstelle des Fließbettkühlers 43 ist auch jedes andere Kühlaggregat verwendbar, mit dem feinkörnige Güter gekühlt werden können.

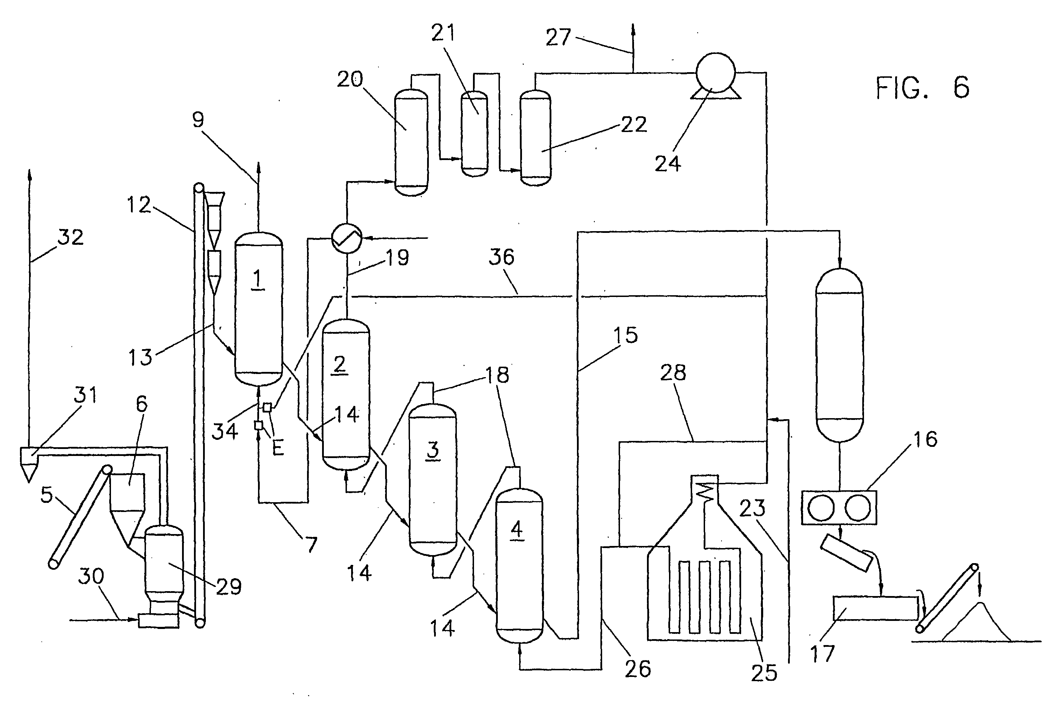

Fig. 6 zeigt die Verfahrensvariante gemäß Fig. 3. Im Unterschied zu Fig. 3 wird die dem Aufheiz-Wirbelschichtreaktor 1 zugeführte Verbrennungsluft in einem in der Topgas-Ableitung 19 vor den Kühl- und Wascheinrichtungen 20 bis 22 angeordneten Wärmetauscher 53 mittels der noch im Topgas vorhandenen fühlbaren Wärme vorgewärmt.

Als Synthesegas für die Reduktion des Feinerzes kann eines oder können mehrere der folgenden Gase eingesetzt werden: reformiertes Erdgas, LD-Abgas, EAF-Abgas, Gichtgas aus Hochofenanlagen und Reduktionsanlagen, Kohlegas, Chemiegase.

Beispiel für die gleichzeitige Vorwärmung, Trocknung und Oxidation eines feuchten, magnetitischen Feinerzes:

Das Erz (5% Feuchte, 0,28% gebundenes Wasser im hydratischen Erzanteil [Limonit]) soll von 25°C auf 700°C vorgewärmt werden, wobei Erdgas als Heizmedium und Energieträger eingesetzt wird. Zur Verbrennung des Erdgases und zur Oxidation des Magnetits zu Hämatit wird der Sauerstoffanteil der Luft verwendet. Die entstehenden Abgase haben ebenfalls eine Temperatur von 700°C.

Für die Erzeugung einer Tonne getrockneten Hämatits sind 23 $Nm^3$ Sauerstoff bzw. 109 $Nm^3$ Luft notwendig. Der Energiebedarf von 399 MJ/t wird durch die Verbrennung von 16 $Nm^3$ Erdgas gedeckt, die zur stöchiometrischen Verbrennung 151 $Nm^3$ Luft benötigen. Berücksichtigt man noch den Luftüberschuß von 260 $Nm^3$ - doppelte Luftzahl vorausgesetzt -, so sind zu deren Erwärmung weitere 242 MJ/t notwendig. Die dafür benötigte Energie wird durch die stöchiometrische Verbrennung von 9,5 $Nm^3$ Erdgas mit 91 $Nm^3$ Luft eingebracht.

Die Gesamtbilanz ergibt damit einen Erdgasbedarf von 25,5 $Nm^3$ und einen Luftbedarf von 611 $Nm^3$ pro Tonne erzeugten Hämatits.

Im Fall eines geringeren Luftüberschusses oder bei Vorwärmung der benötigten Luft reduziert sich der Erdgasverbrauch entsprechend.

Bei Verwendung von Topgas anstelle des Erdgases wird aufgrund des niedrigeren Heizwerts des Topgases eine etwa doppelt so große Menge Topgas benötigt.

**Patentansprüche**

1. Verfahren zur Direktreduktion von Feinerz, enthaltend mindestens eine Erzkomponente aus der Gruppe magnetitischer, hydratischer, carbonatischer oder sulfidischer Erze, im Wirbelschichtverfahren, wobei das Feinerz in einer mit einem Heizmedium beaufschlagten Aufheiz-Wirbelschichtzone unter Verbrennung des Heizmediums erhitzt wird und anschließend in mindestens eine Reduktions-Wirbelschichtzone verbracht wird, in die Synthesegas als Reduktionsgas im Gegenstrom zum Feinerz eingeleitet und als Topgas abgezogen wird und in der eine Reduktion des Feinerzes zu Eisenschwamm durchgeführt wird, wobei zumindest ein Teil des Topgases als Recycle-Reduktionsgas zur Direktreduktion in der Reduktions-Wirbelschichtzone eingesetzt wird, **dadurch gekennzeichnet, daß** als Heizmedium in der Aufheiz-Wirbelschichtzone ein zumindest teilweise verbrauchtes Reduktionsgas aus der Topgas-Ableitung eingesetzt wird und daß in der Aufheiz-Wirbelschichtzone neben einer gezielten Erwärmung des Feinerzes durch Verbrennung des Heizmediums unter zusätzlicher Zuführ von Sauerstoff oder eines sauerstoffhältigen Gases zwecks Einstellung oxidierender Bedingungen eine Abtrennung der Hydrat-, Carbonat- und/ oder Sulfidgruppen und/oder eine Umwandlung in Hämatit durchgeführt wird.

2. Verfahren nach Anspruch 1, **dadurch gekennzeichnet, daß** das Heizmedium mit hohem Luftüberschuß vollständig verbrannt wird.

3. Verfahren nach Anspruch 1 oder 2, **dadurch gekennzeichnet, daß** das zumindest zum Teil von zumindest teilweise verbrauchtem Reduktionsgas gebildete Heizmedium, welches unter $O_2$-Überschuß verbrannt wird, im ungereinigten Zustand eingesetzt wird. (Fig. 2)

4. Verfahren nach Anspruch 1 oder 2, **dadurch gekennzeichnet, daß** verbrauchtes Reduktionsgas, welches unter $O_2$-Überschuß verbrannt wird, im gereinigten und gegebenenfalls verdichteten Zustand als Heizmedium eingesetzt wird. (Fig. 1, 3)

5. Verfahren nach einem oder mehreren der Ansprüche 1 bis 4, **dadurch gekennzeichnet, daß** in der Aufheiz-Wirbelschichtzone zusätzlich eine Trocknung des Feinerzes durchgeführt wird und auch die Trocknung unter zusätzlicher Zufuhr von Sauerstoff oder eines sauerstoffhältigen Gases zwecks Einstellung oxidierender Bedingungen bei Atmosphärendruck durchgeführt wird. (Fig. 1)

6. Verfahren nach einem oder mehreren der Ansprüche 1 bis 4, **dadurch gekennzeichnet, daß** das Feinerz in einer Trocknungs-Wirbelschichtzone getrocknet und nach Verbringen in eine Aufheiz-Wirbelschichtzone im trockenen Zustand mit dem Heizmedium beaufschlagt wird. (Fig. 2, 3)

7. Verfahren nach einem oder mehreren der Ansprüche 1 bis 6, **dadurch gekennzeichnet, daß** der Aufheiz-Wirbelschichtzone drei weitere in Serie angeordnete Reduktions-Wirbelschichtzonen nachgeordnet sind, wobei das erhitzte Feinerz diese drei nachgeordneten Reduktions-Wirbelschichtzonen hintereinander im Gegenstrom zu einem Reduktionsgas durchläuft.

8. Verfahren nach einem oder mehreren der Ansprüche 1 bis 7, **dadurch gekennzeichnet, daß** aus der Aufheiz-Wirbelschichtzone abgezogenes Abgas zur Vorwärmung der für die Verbrennung des Heizmediums dienenden Luft herangezogen wird.

9. Verfahren nach einem oder mehreren der Ansprüche 1 bis 7, **dadurch gekennzeichnet, daß** das aus der Reduktions-Wirbelsehichtzone austretende Topgas zur Vorwärmung der für die Verbrennung des Heizmediums dienenden Luft herangezogen wird.

10. Verfahren nach einem oder mehreren der Ansprüche 1 bis 7, **dadurch gekennzeichnet, daß** das in der Aufheiz-Wirbelschichtzone (37) erhitzte Feinerz (42) in eine Kühlzone eingebracht wird und in dieser mittels Luft (44) unter Vorwärmung derselben gekühlt wird, wobei die so vorgewärmte Luft (45) als sauerstoffhältiges Gas (41) in die Aufheiz-Wirbelschichtzone (37) zwecks Verbrennung des Heizmediums (40) eingeleitet wird. (Fig. 4, 5)

11. Verfahren nach Anspruch 10, **dadurch gekennzeichnet, daß** die vorgewärmte Luft (45) aus der Kühlzone durch Wärmetausch mit dem Abgas (48) aus der Aufheiz-Wirbelschichtzone (37) weiter erhitzt wird. (Fig. 5)

12. Verfahren nach einem oder mehreren der Ansprüche 1 bis 11, **dadurch gekennzeichnet, daß** das aus einer der Aufheiz-Wirbelschichtzone in Förderrichtung des Feinerzes nachgeordneten Reduktions-Wirbelschichtzone austretende Reduktionsgas zum einen Teil als Heizmedium der Aufheiz-Wirbelschichtzone und zum anderen Teil direkt einer Reinigung, Kühlung und Verdichtung sowie einer Aufheizung gemeinsam mit frisch zugeführtem Reduktionsgas unterworfen wird, worauf es als Recycle-Reduktionsgas wiederum für die Direktreduktion eingesetzt wird. (Fig. 1, 2, 3)

13. Anlage zur Durchführung des Verfahrens nach einem der Ansprüche 1 bis 12 mit einem Aufheiz-Wirbelschichtreaktor (1) und mit mindestens einem Reduktions-Wirbelschichtreaktor (2, 3, 4) zur Direktreduktion von Feinerzen mittels eines Reduktionsgases, mit einer Reduktionsgas-Zuleitung (26) zum Reduktions-Wirbelschichtreaktor (4) und einer Topgas-Ableitung (19) für verbrauchtes Reduktionsgas aus dem Reduktions-Wirbelschichtreaktor (2), einer in den Aufheiz-Wirbelschichtreaktor (1) mündenden Erzzuleitung (5, 6) und einem den Aufheiz-Wirbelschichtreaktor (1) mit dem Reduktions-Wirbelschichtreaktor (2) verbindenden Fördersystem (12, 14) für Feinerz, wobei der Aufheiz-Wirbelschichtreaktor (1) mit einer ein Heizmedium führenden Leitung (8, 33, 36, 40) und einer Sauerstoff und/oder ein sauerstoffhältiges Gas führenden Leitung (7) verbunden ist, wobei die Topgas-Ableitung (19) in die Reduktionsgas-Zuleitung (26) mündet, **dadurch gekennzeichnet, daß** die Leitung (8, 33, 36, 40) von einer ein zumindest teilweise verbrauchtes Reduktionsgas führenden Topgas-Ableitung (19) ausgeht und daß eine Einstelleinrichtung (E) zur Sicherung einer in Abhängigkeit der Menge des Heizmediums einstellbaren Sauerstoffmenge, welche größer als die zur Verbrennung des Heizmediums erforderliche Menge ist, vorgesehen ist.

14. Anlage nach Anspruch 13, **dadurch gekennzeichnet, daß** die Topgas-Ableitung (19) über eine Zweigleitung mit der das Heizmedium führenden Leitung (8) verbunden ist.

15. Anlage nach Anspruch 14, **dadurch gekennzeichnet, daß** die Topgas-Ableitung (19) mit Einrichtungen (20, 21, 22) zum Kühlen und Waschen sowie mit einem Kompressor (24) zur Verdichtung des Topgases ausgestattet ist und im Anschluß an die Einrichtungen (20, 21, 22) zum Kühlen und Waschen oder im Anschluß an den Kompressor (24) über eine Zweigleitung mit der das Heizmedium führenden Leitung (8) verbunden ist.

16. Anlage nach einem oder mehreren der Ansprüche 13 bis 15, **dadurch gekennzeichnet, daß** dem Aufheiz-Wirbelschichtreaktor (1) eine Trocknungseinrichtung (29) für das Feinerz vorgeordnet ist.

17. Anlage nach einem oder mehreren der Ansprüche 13 bis 16, **dadurch gekennzeichnet, daß** dem Aufheiz-Wirbelschichtreaktor (1) drei Reduktions-Wirbelschichtreaktoren (2, 3, 4), welche das Feinerz hintereinander durchläuft, in Serie nachgeordnet sind, wobei die Reduktionsgas-Zuführung (26) mit dem in Fließrichtung des Feinerzes letztangeordneten Reduktions-Wirbelschichtreaktor (4) und die Topgas-Ableitung (19) mit dem ersten Reduktions-Wirbelschichtreaktor (2) verbunden ist.

18. Anlage nach einem oder mehreren der Ansprüche 13 bis 17, **dadurch gekennzeichnet, daß** in der Sauerstoff und/oder das sauerstoffhältige Gas führenden Leitung (7) ein Rekuperator (52) für Abgas vom Aufheiz-Wirbelschichtreaktor (1) vorgesehen ist.

19. Anlage nach einem oder mehreren der Ansprüche 13 bis 18, **dadurch gekennzeichnet, daß** in der Sauerstoff und/oder das sauerstoffhältige Gas führenden Leitung (7) ein Rekuperator für ungekühltes Topgas vorgesehen ist.

20. Anlage nach einem oder mehreren der Ansprüche 13 bis 19, **dadurch gekennzeichnet, daß** nach dem Aufheiz-Wirbelschichtreaktor (1) ein mit Luft als Kühlmedium arbeitender Kühler (43) für das Feinerz vorgesehen ist, der hinsichtlich des Kühlmediums leitungsmäßig über eine Gasleitung (45) mit der Sauerstoff und/oder das sauerstoffhältige Gas führenden Leitung (7) verbunden ist. (Fig. 4)

21. Anlage nach Anspruch 20, **dadurch gekennzeichnet, daß** in der Gasleitung (45) ein Rekuperator (52) für Abgas (48) vom Aufheiz-Wirbelschichtreaktor (1) vorgesehen ist. (Fig. . 5)

22. Anlage nach einem oder mehreren der Ansprüche 13 bis 21, **dadurch gekennzeichnet, daß** die Topgas-Ableitung (19) über Einrichtungen (20, 21, 22) zum Kühlen und Waschen, einen Kompressor (24) und einen Reduktionsgasofen (25) in die Reduktionsgas-Zuleitung (26) mündet und daß eine frisches Reduktionsgas führende Reduktionsgasleitung (23) vorgesehen ist, die vor dem Reduktionsgasofen (25) in die Topgas-Ableitung (19) einmündet.

## Claims

1. Process for the direct reduction of fine ore, including at least one ore component from the group consisting of magnetitic, hydratic, carbonatic or sulfidic ores, using the fluidized-bed process, in which the fine ore is heated in a heating fluidized-bed zone, which is acted on by a heating medium, with combustion of the heating medium and is then transferred into at least one reduction fluidized-bed zone, into which synthesis gas is introduced as reduction gas in countercurrent to the fine ore and is extracted as top gas and in which the fine ore is reduced to form iron sponge, at least some of the top gas being used as recycle reduction gas for direct reduction in the reduction fluidized-bed zone, **characterized in that** the heating medium used in the heating fluidized-bed zone is an at least partially used reduction gas from the top-gas outlet line, and **in that** in the heating fluidized-bed zone, in addition to targeted heating of the fine ore by combustion of the heating medium, with additional supply of oxygen or an oxygen-containing gas, in order to set oxidizing conditions, a separation of the hydrate, carbonate and/or sulfide groups and/or a conversion into hematite is carried out.

2. Process according to Claim 1, **characterized in that** the heating medium is burnt completely with a high excess of air.

3. Process according to Claim 1 or 2, **characterized in that** the heating medium, which is formed at least in part by at least partially used reduction gas and is burnt under an excess of $O_2$, is used in the unpurified state. (Fig. 2)

4. Process according to Claim 1 or 2, **characterized in that** used reduction gas which is burnt under an excess of $O_2$ is used in the purified and if appropriate compressed state as a heating medium. (Fig. 1, 3)

5. Process according to one or more of Claims 1 to 4, **characterized in that** drying of the fine ore is additionally carried out in the heating fluidized-bed zone, and the drying is also carried out with an additional supply of oxygen or an oxygen-containing gas in order to set oxidizing conditions at atmospheric pressure. (Fig. 1)

6. Process according to one or more of Claims 1 to 4, **characterized in that** the fine ore is dried in a drying fluidized-bed zone and, after it has been moved into a heating fluidized-bed zone in the dry state, is acted on by the heating medium. (Fig.2, 3)

7. Process according to one or more of Claims 1 to 6, **characterized in that** three further reduction fluidized-bed zones, arranged in series, are located downstream of the heating fluidized-bed zone, the heated fine ore passing through these three downstream reduction fluidized-bed zones in succession, in countercurrent to a reduction gas.

8. Process according to one or more of Claims 1 to 7, **characterized in that** off-gas which has been extracted from the heating fluidized-bed zone is used to preheat the air which is used for the combustion of the heating medium.

9. Process according to one or more of Claims 1 to 7, **characterized in that** the top gas which emerges from the reduction fluidized-bed zone is used to preheat the air which is used for the combustion of the heating medium.

10. Process according to one or more of Claims 1 to 7, **characterized in that** the fine ore (42) which has been heated in the heating fluidized-bed zone (37) is introduced into a cooling zone, in which it is cooled by means of air (44), preheating the latter, with the air (45) which has been preheated in this way being introduced as oxygen-containing gas (41) into the heating fluidized-bed zone (37) for combustion of the heating medium (40). (Fig, 4, 5)

11. Process according to Claim 10, **characterized in that** the preheated air (45) from the cooling zone is heated further by heat exchange with the off-gas (48) from the heating fluidized-bed zone (37). (Fig. 5)

12. Process according to one or more of Claims 1 to 11, **characterized in that** the reduction gas which emerges from a reduction fluidized-bed zone arranged downstream of the heating fluidized-bed zone, as seen in the direction in which the fine ore is conveyed, is in part used as heating medium for the heating fluidized-bed zone, while the other part is directly subjected to purification, cooling and compression and also to heating together with freshly supplied reduction gas, after which it is in turn used as a recycled reduction gas for the direct reduction. (Fig. 1, 2, 3)

13. Installation for carrying out the process according to one of Claims 1 to 12, having a heating fluidized-bed reactor (1) and having at least one reduction fluidized-bed reactor (2, 3, 4) for direct reduction of fine ores by means of a reduction gas, having a reduction-gas feed line (26) leading to the reduction fluidized-bed reactor (4) and a top-gas outlet line (19) for used reduction gas from the reduction fluidized-bed reactor (2), an ore feed line (5, 6) which opens out into the heating fluidized-bed reactor (1) and a conveying system (12, 14) for fine ore, which connects the heating fluidized-bed reactor (1) to the reduction fluidized-bed reactor (2), the heating fluidized-bed reactor (1) being connected to a line (8, 33, 36, 40) which carries a heating medium and to a line (7) which carries oxygen and/or an oxygen-containing gas, the top-gas outlet line (19) opening out into the reduction-gas feed line (26), **characterized in that** the line (8, 33, 36, 40) starts from a top-gas outlet line (19) which carries an at least partially used reduction gas, and **in that** there is an adjusting device (E) for ensuring a quantity of oxygen which can be adjusted as a function of the quantity of the heating medium and is greater than the quantity required for combustion of the heating medium.

14. Installation according to Claim 13, **characterized in that** the top-gas outlet line (19) is connected to the line (8) which carries the heating medium via a branch line.

15. Installation according to Claim 14, **characterized in that** the top-gas outlet line (19) is equipped with devices (20, 21, 22) for cooling and scrubbing and with a compressor (24) for compressing the top gas, and is connected to the line (8) which carries the heating medium via a branch line downstream of the devices (20, 21, 22) for cooling and scrubbing or downstream of the compressor (24).

16. Installation according to one or more of Claims 13 to 15, **characterized in that** a drying device (29) for the fine ore is arranged upstream of the heating fluidized-bed reactor (1).

17. Installation according to one or more of Claims 13 to 16, **characterized in that** three reduction fluidized-bed reactors (2, 3, 4), which the fine ore passes through in succession, are arranged in series downstream of the heating fluidized-bed reactor (1), the reduction-gas feed (26) being connected to the reduction fluidized-bed reactor (4) which is arranged last as seen in the direction of flow of the fine ore, and the top-gas outlet line (19) being connected to the first reduction fluidized-bed reactor (2).

18. Installation according to one or more of Claims 13 to 17, **characterized in that** a recuperator (52) for off-gas from the heating fluidized-bed reactor (1) is provided in the line (7) which carries oxygen and/or the oxygen-containing gas.

19. Installation according to one or more of Claims 13 to 18, **characterized in that** a recuperator for uncooled top gas is provided in the line (7) which carries oxygen and/or the oxygen-containing gas.

20. Installation according to one or more of Claims 13 to 19, **characterized in that** a cooler (43) for the fine ore is provided downstream of the heating fluidized-bed reactor (1), which cooler operates with air as cooling medium and is line-connected, in terms of the cooling medium, to the line (7) which carries oxygen and/or the oxygen-containing gas via a gas line (45). (Fig. 4)

21. Installation according to Claim 20, **characterized in that** a recuperator (52) for off-gas (48) from the heating fluidized-bed reactor (1) is provided in the gas line (45). (Fig. 5)

EP 1 294 953 B1

**22.** Installation according to one or more of Claims 13 to 21, **characterized in that** the top-gas outlet line (19) opens out into the reduction-gas feed line (26) via devices (20, 21, 22) for cooling and scrubbing, a compressor (24) and a reduction-gas furnace (25), and **in that** a reduction-gas line (23) which carries fresh reduction gas is provided and opens out into the top-gas outlet line (19) upstream of the reduction-gas furnace (25).

## Revendications

**1.** Procédé de réduction directe de fines de minerai qui contiennent au moins un composant de minerai du groupe des minerais de magnétites, hydratés, carbonatés ou sulfurés, par le procédé à lit fluidisé, dans lequel les fines de minerai sont chauffées dans une zone d'échauffement à lit fluidisé alimentée en fluide de chauffage, avec combustion du fluide de chauffage et sont ensuite amenées dans au moins une zone de réduction à lit fluidisé dans laquelle un gaz de synthèse est introduit comme gaz réducteur à contre-courant des fines de minerai et est extrait comme gaz de tête et dans laquelle est réalisée une réduction des fines de minerai en éponge de fer, au moins une partie du gaz de tête étant utilisée comme gaz réducteur recyclé en vue de la réduction directe dans la zone de réduction à lit fluidisé, **caractérisé en ce que** comme fluide de chauffage dans la zone d'échauffement à lit fluidisé, on utilise un gaz réducteur au moins partiellement épuisé provenant du conduit d'évacuation du gaz de tête et **en ce que** dans la zone d'échauffement à lit fluidisé, en plus d'un échauffement contrôlé des fines de minerai par combustion du fluide de chauffage avec addition supplémentaire d'oxygène ou d'un gaz qui contient de l'oxygène en vue de l'établissement de conditions oxydantes, on réalise une séparation des groupes hydrate, carbonate et/ou sulfure et/ou une conversion en hématite.

**2.** Procédé selon la revendication 1, **caractérisé en ce que** le fluide de chauffage est brûlé complètement avec un grand excès d'air.

**3.** Procédé selon les revendications 1 ou 2, **caractérisé en ce que** le fluide de chauffage formé en partie de gaz réducteur au moins partiellement épuisé qui est brûlé avec un excès d'$O_2$ est utilisé à l'état non épuré (figure 2).

**4.** Procédé selon les revendications 1 ou 2, **caractérisé en ce que** le gaz réducteur épuisé qui est brûlé avec un excès d'$O_2$ est utilisé comme fluide de chauffage après avoir été épuré et éventuellement comprimé (figures 1, 3).

**5.** Procédé selon l'une ou plusieurs des revendications 1 à 4, **caractérisé en ce que** dans la zone d'échauffement à lit fluidisé on réalise en plus un séchage des fines de minerai, le séchage étant également réalisé sous pression atmosphérique avec apport supplémentaire d'oxygène ou d'un gaz qui contient de l'oxygène, en vue d'établir des conditions oxydantes (figure 1).

**6.** Procédé selon l'une ou plusieurs des revendications 1 à 4, **caractérisé en ce que** les fines de minerai sont séchées dans une zone de séchage à lit fluidisé et sont alimentées en fluide de chauffage après avoir été amenées à l'état sec dans une zone d'échauffement à lit fluidisé (figures 2, 3).

**7.** Procédé selon l'une ou plusieurs des revendications 1 à 6, **caractérisé en ce que** trois zones de réduction à lit fluidisé disposées en série sont disposées en aval de la zone de l'échauffement à lit fluidisé, les fines de minerai chauffées traversant successivement ces trois zones aval de réduction à lit fluidisé à contre-courant par rapport à un gaz réducteur.

**8.** Procédé selon l'une ou plusieurs des revendications 1 à 7, **caractérisé en ce que** le gaz extrait de la zone d'échauffement à lit fluidisé est utilisé pour le préchauffage de l'air qui sert pour la combustion du fluide de chauffage.

**9.** Procédé selon l'une ou plusieurs des revendications 1 à 7, **caractérisé en ce que** le gaz de tête qui sort de la zone de réduction à lit fluidisé est utilisé pour le préchauffage de l'air qui sert à la combustion du fluide de chauffage.

**10.** Procédé selon l'une ou plusieurs des revendications 1 à 7, **caractérisé en ce que** les fines de minerai (42) chauffées dans la zone (37) d'échauffement à lit fluidisé sont amenées dans une zone de refroidissement dans laquelle elles sont refroidies au moyen d'air (44) avec échauffement de ce dernier, l'air (45) ainsi préchauffé étant introduit comme gaz (41) qui contient de l'oxygène dans la zone (37) d'échauffement à lit fluidisé en vue de la combustion du fluide de chauffage (40) (figures 4, 5).

**11.** Procédé selon la revendication 10, **caractérisé en ce que** l'air préchauffé (45) qui provient de la zone de refroi-

12

dissement est de nouveau chauffé par échange de chaleur avec le gaz (48) extrait de la zone (37) d'échauffement à lit fluidisé (figure 5).

**12.** Procédé selon l'une ou plusieurs des revendications 1 à 11, **caractérisé en ce que** le gaz réducteur qui sort d'une zone de réduction à lit fluidisé situé en aval de la zone d'échauffement à lit fluidisé dans la direction du transport est utilisé en partie comme fluide de chauffage de la zone d'échauffement à lit fluidisé et pour une autre partie subit directement une épuration, un refroidissement et une compression ainsi qu'un échauffement, en même temps que du gaz réducteur fraîchement apporté, suite à quoi il est de nouveau utilisé pour la réduction directe comme gaz réducteur recyclé (figures 1, 2, 3).

**13.** Installation en vue de la mise en oeuvre du procédé selon l'une des revendications 1 à 12, avec un réacteur (1) d'échauffement à lit fluidisé et au moins un réacteur (2, 3, 4) de réduction à lit fluidisé en vue de la réduction directe de fines de minerai au moyen d'un gaz réducteur, avec un conduit (26) d'amenée de gaz réducteur vers le réacteur (4) de réduction à lit fluidisé et un conduit (19) d'évacuation du gaz de tête pour le gaz réducteur épuisé qui provient du réacteur (2) de réduction à lit fluidisé, un conduit de minerai (5, 6) qui débouche dans le réacteur (1) d'échauffement à lit fluidisé et un système (12, 14) de transport des fines de minerai qui relie le réacteur (1) d'échauffement à lit fluidisé au réacteur (2) de réduction à lit fluidisé, le réacteur (1) d'échauffement à lit fluidisé étant relié à un conduit (8, 33, 36, 40) qui conduit le fluide de chauffage et à un conduit (7) qui amène l'oxygène et/ou un gaz qui contient de l'oxygène, le conduit (19) d'évacuation du gaz de tête débouchant dans le conduit (26) de gaz réducteur, **caractérisé en ce que** le conduit (8, 33, 36, 40) part d'un conduit (19) d'évacuation du gaz de tête qui transporte un gaz réducteur au moins en partie consommé et **en ce qu'**un dispositif de réglage (E) qui assure un débit d'oxygène qui peut être réglé en fonction du débit de fluide de chauffage et qui est supérieur au débit nécessaire pour la combustion du fluide de chauffage est prévu.

**14.** Installation selon la revendication 13, **caractérisée en ce que** le conduit (19) d'évacuation du gaz de tête est relié par une dérivation au conduit (8) qui amène le fluide de chauffage.

**15.** Installation selon la revendication 14, **caractérisée en ce que** le conduit (19) d'évacuation du gaz de tête est équipé de dispositifs (20, 21, 22) de refroidissement et de lavage ainsi que d'un compresseur (24) qui comprime le gaz de tête et est relié par une dérivation au conduit (8) qui amène le fluide de chauffage après les dispositifs (20, 21, 22) de refroidissement et de lavage ou après le compresseur (24).

**16.** Installation selon l'une ou plusieurs des revendications 13 à 15, **caractérisée en ce qu'**un dispositif (29) de séchage des fines de minerai est disposé en amont du réacteur (1) d'échauffement à lit fluidisé.

**17.** Installation selon l'une ou plusieurs des revendications 13 à 16, **caractérisée en ce que** trois réacteurs (2, 3, 4) de réduction à lit fluidisé traversés successivement par les fines de minerai sont disposés en série après le réacteur (1) d'échauffement à lit fluidisé, l'amenée (26) de gaz réducteur étant reliée au réacteur (4) de réduction à lit fluidisé disposés en dernier lieu dans la direction d'écoulement des fines de minerai, le conduit (19) d'évacuation du gaz de tête étant relié au premier réacteur (2) de réduction à lit fluidisé.

**18.** Installation selon l'une ou plusieurs des revendications 13 à 17, **caractérisée en ce qu'**un récupérateur (52) des gaz qui proviennent du réacteur (1) d'échauffement à lit fluidisé est prévu dans le conduit (7) qui amène l'oxygène et/ou le gaz qui contient de l'oxygène.

**19.** Installation selon l'une ou plusieurs des revendications 13 à 18, **caractérisée en ce qu'**un récupérateur de gaz de tête non refroidi est prévu dans le conduit (7) qui amène l'oxygène et/ou le gaz qui contient de l'oxygène.

**20.** Installation selon l'une ou plusieurs des revendications 13 à 19, **caractérisée en ce qu'**un refroidisseur (43) des fines de minerai qui travaille avec de l'air comme fluide de refroidissement est prévu après le réacteur (1) d'échauffement à lit fluidisé et, en ce qui concerne le fluide de refroidissement, est relié par un conduit de gaz (45) au conduit (7) qui amène l'oxygène et/ou le gaz qui contient de l'oxygène (figure 4).

**21.** Installation selon la revendication 20, **caractérisée en ce qu'**un récupérateur (52) de gaz (48) en provenance du réacteur (1) d'échauffement à lit fluidisé est prévu dans le conduit de gaz (45) (figure 5).

**22.** Installation selon l'une ou plusieurs des revendications 13 à 21, **caractérisée en ce que** le conduit (19) d'évacuation du gaz de tête débouche par des dispositifs (20, 21, 22) de refroidissement et de lavage, un compresseur (24) et un four (25) à gaz réducteur dans le conduit (26) d'amenée de gaz réducteur et **en ce qu'**un conduit (23) de gaz réducteur qui apporte du gaz réducteur frais est prévu et débouche dans le conduit (19) d'évacuation du gaz de tête en amont du four (25) à gaz réducteur.

FIG. 1

FIG. 2

FIG. 3

EP 1 294 953 B1

FIG. 4

FIG. 5

EP 1 294 953 B1

FIG. 6

EP 1 294 953 B1